## Europäisches Patentamt
## European Patent Office
## Office européen des brevets

(19)

(11) Publication number: **0 193 118**
**A2**

(12) # EUROPEAN PATENT APPLICATION

(21) Application number: **86102229.1**

(22) Date of filing: **20.02.86**

(51) Int. Cl.⁴: **G 02 B 6/40**

(30) Priority: **01.03.85 IT 1973685**

(43) Date of publication of application:
**03.09.86 Bulletin 86/36**

(84) Designated Contracting States:
**AT BE CH DE FR GB LI LU NL SE**

(71) Applicant: **Società Cavi Pirelli S.p.A.**
**Piazzale Cadorna 5**
**I-20123 Milan(IT)**

(72) Inventor: **Gazzana Priaroggia, Paolo**
**Piazza S. Ambrogio 8**
**Milan(IT)**

(74) Representative: **Mariani, Giorgio, Dr. et al,**
**INDUSTRIE PIRELLI S.p.A. Direzione Brevetti Piazzale**
**Cadorna, 5**
**I-20123 Milano(IT)**

(54) Joints for optical fiber telecommunication submarine cables.

(57) A joint for optical fiber telecomunication submarine cables according to the invention provides for a metal ferrule (17) that butt-connects the mechanically resistant armours (18, 19) of two cables (15, 16) constituted by metal wires and the like that occupy the radially innermost position of the cables themselves.

Around the ferrule there is a joint core (20) of plastic material in which there are through cavities (23) filled with an incompressible fluid that loosely house the extremities (26) of the optical fibers of the cables and their connections (27). A joint sheath (28) of plastic material encircles the core and is connected to the plastic material sheaths of the cables (15, 16).

EP 0 193 118 A2

./...

fig. 2

"JOINTS FOR OPTICAL FIBER TELECOMMUNICATION SUBMARINE CABLES"

D E S C R I P T I O N

The present invention refers to a joint for optical fiber telecomunication submarine cables. In particular the present invention refers to a joint for optical fiber telecomunication submarine cables of the types provided with a plastic material sheath and in which the sole mechanically resistant armour that is provided occupies the radially innermost zone of the cables themselves.

By means of the joints according to the invention it is possible to connect, for instance, the cables described in the Italian patent applications No. 19,654 A/85 and No. 19,655 A/85 of the same Applicant that fall within the types of cables previously mentioned.

The joints are very delicate components of the optical fiber submarine cables.

In fact they have to permit perfect connections among the optical fibers besides to protect these latter and the connections from suffering also minimum mechanical stresses under the action of the hydrostatic pressure and under the tension stresses exercised in the cable during its laying.

Therefore it is important that the joints have a structure that besides protecting the optical fibers, facilitates at the maximum the connections among these latter.

Further it is important that the joints with their presence do not cause problems during the laying operations of a submarine cable embedding said joints.

In order to reduce these problems it is necessary that the following conditions will be met:

- the outer diametrical dimensions of the joints must be possibly equal to the outer diametrical dimensions of the cable lengths connected by said joints

- the flexibility of the joints must differ from that of the cable lengths connected by said joints as little as possible;

- the weight of the joint must be reduced at the minimum.

Moreover it is important that the joints do not suffer damages in their sheath due to a greater thermal expansion of the elements contained therein, for instance due to sun exposure awaiting their laying, owing to the different nature of the materials forming the sheath and the elements enclosed by this latter.

The aim of the present invention is that of providing joints for optical fiber telecomunication submarine cables that solve in an optimal manner the above explained problems. In particular the aim of the present invention is constituted by joints that conferring a very good mechanical protection to the optical fibers and to their connections, have a great flexibility, a light weight, permit an easy realization of the connections among the optical fibers and consequently give an optimal reliability for said connections and that are devoid of risks of damages in their sheaths if subjected to thermal variations.

The object of the present invention is a joint for optical fiber telecomunication submarine cables of the type in which a sheath of plastic material encloses a core provided with throungh cavities filled with a practically incompressible fluid where the optical fibers are loosely housed and a mechanically resistant armour that occupies the radially innermost zone of the core, said joint being characterized by the fact of comprising: a mechanical connection that butt-joints the armours of the cables, connections among the ends of the optical fibers projecting from the cables and enclosed in cavities filled with an incompressible fluid of a joint body of plastic material, said cavities extending in longitudinal direction to the joint, and a sheath of plastic material that encloses the joint body matching its radially outermost surface, said joint being devoid of any tight metal sheath and any mechanically resistant armour, outside of and surrounding the zone where the optical fibers and their connections are arranged.

The term "incompressible fluid" referred to in this disclosure means liquid substances, preferably viscous, also at high viscosity and this term does not include gases.

The present invention will be better understood by the following detailed description made by way of non limiting example, with reference to the figures of the attached sheets of drawing in which:
- figure 1 shows in perspective view and in longitudinal section a joint according to the invention
- figure 2 shows in perspective view and in longitudinal section a joint according to the invention in an alternative embodiment.

In general the joints according to the invention are suitable for connecting two lengths of optical fiber submarine cables of the types provided with a sheath of plastic material and a mechanically resistant armour that occupies the radially innermost position of a plastic material core where there are cavities filled with an incompressible fluid and housing the optical fibers in a loose manner.

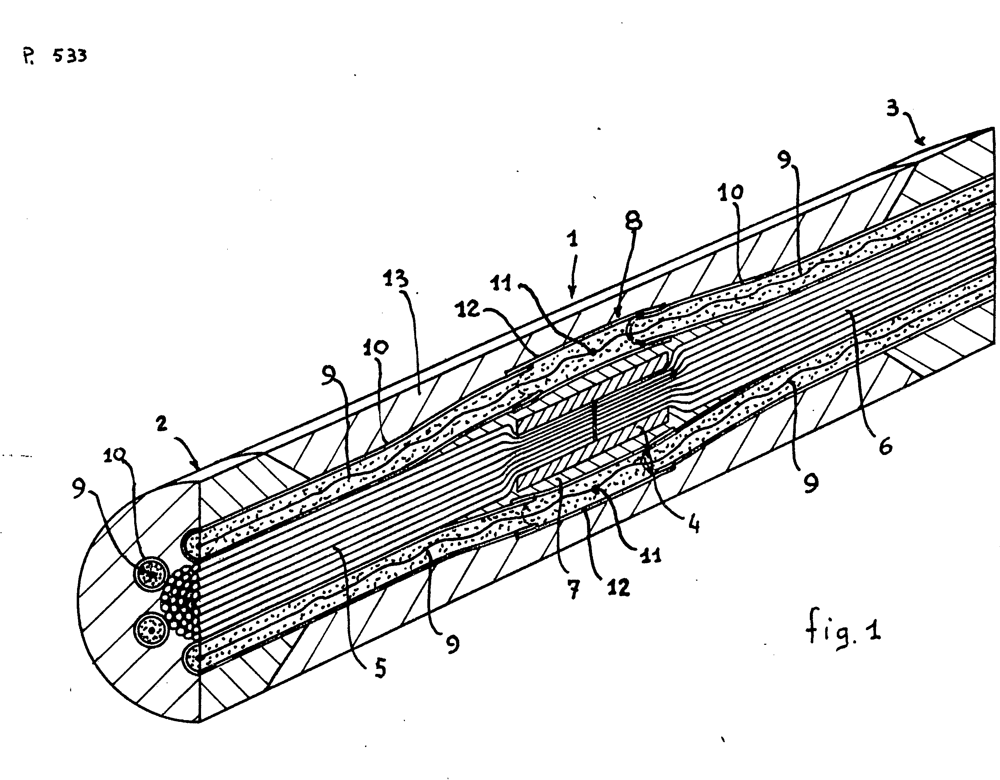

Figure 1 shows a joint according to the present invention that connects two lengths of cables of the type described above.

In particular the joint 1 of figure 1 is particularly suitable for connecting the cables 2 and 3 described in the Italian patent application No. 19 655 A/85 of the same Applicant whose ends have been previously prepared by stepwise stripping of the components.

The joint represented in the figure 1 presents, by starting from the inside toward the outside the following elements.

A mechanical connection, constituted by a metallic ferrule 4, butt-joints the armours 5 and 6 of the cables 2 and 3 formed by compact anti-torsional ropes in which the spaces among the component wires are filled with a practically incompressible fluid, for instance petroleum jelly, silicone greases and the like. Also every space between the ferrule 4 and the armours 5 and 6 is filled with the same incompressible fluid.

The metallic ferrule 4 represented in figure 1 has the same diameter as the armours 5 and 6; but this must not be understood in a limiting sense since the ferrule can also be not of the same diameter.

In alternative the mechanical connection between the armours 5 and 6 is constituted by a work-hardened welding and the like.

Anyhow, the mechanical connection must be sized so as to withstand all the tension stresses exercised in the joint during the laying or during the recovering of the cable and has, if requested, the function of carrying out the electrical connection between the armours 5 and 6 when their conductivity is improved, for instance by the presence of a metallic element at high conductivity as one or a plurality of copper wires and the like.

A layer 7 of plastic material is arranged on the ferrule 4 and on the stripped ends of the armours 5 and 6.

The plastic materials for the layer 7 can be for instance the poliolefines, such as the polyethylene and the polypropylene, the aliphatic poliammides and the like.

Preferably the layer 7 has a spindle-like shape. The connections 8 of the optical fibers 9 and the extremities of the tubes 10 of the cables filled with an incompressible fluid and loosely housing the optical fibers lean on the layer 7.

The connection 8 comprise a butt-welding 11 among the optical fibers 9 of the cables 2 and 3 and a sleeve 12, filled with an incompressible fluid in the extremities of which there are inserted the extremities of the tubes 10 of the cables 2 and 3.

The sleeve 12 is for instance of plastic material or of other materials. The assembly formed by the layer 7, tubes 10 and sleeves 12 constitutes the joint body of plastic material.

A sheath of plastic material 13 of the joint connects the plastic sheaths of the cables 2 and 3 to each other having the outer diameter equal to the outer diameter of these latter and embedds the pairs of tubes 10 and the sleeves 12 connecting said tubes going into contact through its own radially innermost surface with the surface of the layer 7 free from contact with the assembly formed by the pairs of tubes and the sleeves.

The plastic materials for forming the sheath 13 of the joint can be, even if not necessarily, those cited for the layer 7.

Preferably the layer 7 and the sheath 13 are of aliphatic polyammides because these materials, due to their mechanical characteristics, make the joint radially less compressible avoiding thus also very small variations of the diametrical dimensions of the tubes and sleeves and consequently every possible longitudinal movement of the incompressible fluid filling said tubes.

According to a not shown alternative embodiment of the joint of figure 1, the layer 7 is not present. In this alternative embodiment the tubes 10 connected in pairs by the sleeves 12 are in direct contact with the ferrule 4 and with the extremities of the stripped armours 5 and 6 of the cables; consequently the joint sheath 13 of plastic material embedding said tubes and said sleeves matches with its own radially innermost surface the ferrule and the extremities of the armours.

In the embodiment of figure 1 and in its alternative embodiment the assembly formed by the pairs of tubes and sleeves gives rise within the joint to a plurality of through cavities extending in longitudinal direction along the joint and filled with a practically incompressible fluid. Moreover, within the joint there are no spaces free from material.

Around the joint sheath 13 of plastic material there can be present other coverings, such as for instance an antiteredine protection of type known per se, in case the cables connected by the joint foresee them, but said further coverings must originate neither a tight metal sheath for the joint, nor a mechanically resistant outer armour surrounding the zone of the joint in which the optical fibers and their connections are arranged.

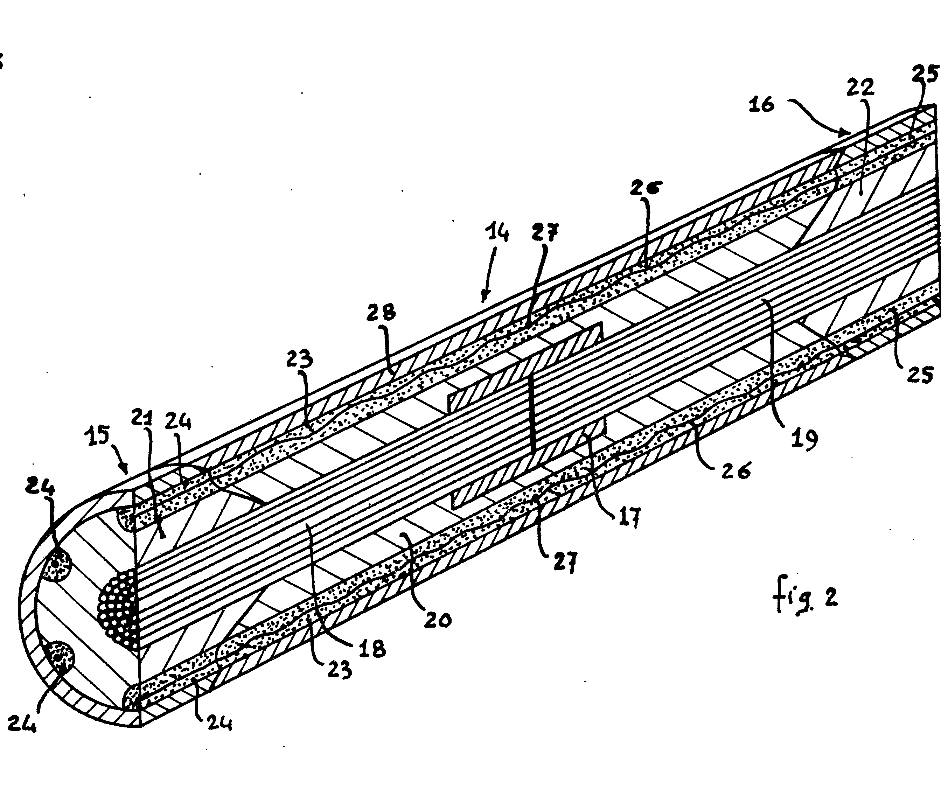

Figure 2 shows an alternative embodiment according to the invention. This alternative embodiment is particularly suitable, but not necessarily as it will be explained in the present specification, for connecting together two cable lengths described in the Italian patent application No. 19 654 A/85 of the same Applicant.

The following description will recall the essential components of the above cited cables which have been stepwise stripped at their extremities for forming the joint.

As shown in figure 2 the joint 14 that connects together the cables 15 and 16 comprises a metallic ferrule 17 or a work-hardened welding and the like that mechanically butt-connect the armours 18 and 19 of the cables.

The ferrule 17 is sized so as to withstand all the tension stresses in the joint during the laying or the recovery of the cable and, if requested, said ferrule has also the function of realizing an electrical connection between the armours 18 and 19 of the cables.

Within the ferrule 17 each space lefts empty by the armours of the cables is filled with the same practically incompressible fluid as the petroleum jelly, the silicone grease and the like that fills all spaces present in these latter. A tubular layer 20 of plastic material, for instance a polyolefine or preferably an aliphatic polyammide covers and is bound to the ferrule 17 and to the extremities of the armours 18 and 19 of the cables.

The layer 20 which is bound also to the cores 21 and 23 of plastic material of the cables 15 and 16 is provided on its own radially outermost surface with a plurality of grooves 23 filled with a practically incompressible fluid and constitutes the body of plastic material of the joint. Each groove 23 connects a groove 24 of the cable 15 to a groove 25 of the cable 16, both filled with an incompressible fluid.

The ends of the optical fibers 26 of the cables, that are loosely housed in the grooves 24 and 25 project from these latter for a length, for instance greater than that necessary for their connections. The ends of the optical fibers 26 are housed in the grooves 23 of the tubular layer 20 and are butt-welded at point 27 so as to realize a connection.

The joint sheath of plastic material 28 is arranged around the tubular layer 20. Said sheath 28, for instance made of a polyolefine or preferably an aliphatic polyammide, has at its own radially innermost surface, the same diameter as the outer diameter of the cables 15 and 16 and connects together the sheaths 29 of plastic material of the cables. Moreover the sheath 28 closes toward outside the grooves 23 that constitute therefore the cavity of the joint body. If it is feared that before the application of said sheath 28 the incompressible fluid filling the grooves 23 can escape in part from them, between the plastic sheath 28 and the tubular layer 20 there is interposed a taping of plastic material not shown. Around the plastic sheath 28 of the joint there can be provided other coverings, for instance an antiteredine protection of type known per se if the cables connected by means of the joint foresee them. However, said further coverings must not originate a tight metal sheath nor an outer mechanically resistant armour surrounding the zone of the joint where there are disposed the optical fibers and their connections.

When the optical fibers 26 of the cables are loosely housed within the tubes filled with an incompressible fluid on their turn received in the grooves 24 and 25 they constitute an alternative embodiment (not shown) of the joint of figure 2 .

In this case the extremities of the tubes are encased in the grooves 23 of the tubular layer 20 and a sleeve filled with an incompressible fluid, completely similar to that 12 of figure 1 connects the extremities of the tubes and surrounds the butt-welding among the optical fibers.

The grooves 23 are completely filled with an incompressible fluid. In alternative, the grooves 23 are filled with the plastic material of the sheath 28 originating in this latter a plurality of ribs whose profile has a shape complementary to that of the assembly formed by the tubes and sleeves.

It follows that in this latter alternative embodiment of a joint according to the figure 2 in which the optical fibers are loosely housed in tubes connected to one another by sleeves, the radially innermost surface of the joint sheath 28 of plastic material has a configuration nearly of the same type as that of the plastic sheath 13 of the embodiment shown in figure 1.

In fact in both cases the joint sheath of plastic material winds the surfaces of the tubes and sleeves.

This means that by means of the joint of figure 2 it is possible to connect together the cables 2 and 3 of figure 1.

Likewise, by means of the joint of figure 1 it is possible to connect together the cables 15 and 16 of figure 2; in this case the extremities of the cable optical fibers will be housed in tubes connected to one another by sleeves that lean on the sleeve covering.

From the above reported description of the various embodiments of the joints and from the following consideration it is understood that by means of the present invention the aimed purposes are achieved.

In the joints according to the present invention the sheath is of plastic material and consequently has no negative influence to the effects of their flexibility.

Moreover the mechanically resistant armour of the joints, through which the mechanical connection between the cable armours is realized is disposed in the radially innermost zone of the cable. Therefore said armour results to be near the joint longitudinal axis that corresponds to the flexible neutral axis of the joint and consequently cannot negatively affect its flexibility.

It follows that the joints according to the present invention have the best possible flexibility and a light weight; moreover their flexibility results to be substantially equal to that of the cables connected by said joints.

Therefore the presence of joints according to the present invention in optical fiber submarine cables does not cause in practice discontinuities in the cable flexibility.

This fact and the light weight in se of the joints according to the present invention that do not cause an increase in the weight of the cables comprising said joints, facilitate the laying operation and its possible recovery.

Moreover the joints according to the present invention are of quick and easy realization thanks to the absence both of a tight metal sheath and of a mechanically resistant armour disposed around the zone in which there are the optical fibers and their connections; the realization of these latter is therefore facilitated with the advantage of a greater reliability.

In spite of the absence of a tight metal sheath and of a mechanically resistant armour around the the optical fibers, the joints of the present invention are devoid of the risk of transmitting mechanical stresses to the optical fibers and to their connection due to the hydrostatic pressure and the mechanical stresses arising during the laying operation.

In fact the resistance to the hydrostatic pressure is assured by the fact that in the joints according to the present invention there are no empty spaces within the sheath. Moreover during the laying operations the tension stresses given to the armours of the joints cannot affect the optical fibers because these latter being outside of the armour cannot be involved by possible less diametrical shrinkages that may originate in said armour.

As already pointed out in the joints according to the present invention, the sheath is of plastic material and not of metallic material as considered indispensable up to now to avoid that also very small water traces can come into contact with the optical fibers and their connections causing attenuations of the signals transmitted and embrittlements.

In spite of the presence of a plastic sheath, that cannot guarantee an impermeableness equal to that of a metal sheath in the joints according to the present invention, the above reported drawbacks do not occur.

Moreover in the joints according to the present invention the presence of a plastic sheath makes them devoid of the risks consequent to the variations of temperature to which the joint can be subjected waiting for the laying operations.

In fact with respect to a metal sheath, a plastic sheath has a greater possibility of expansion. Therefore, thanks to the expansion properties of a plastic sheath, the risks of ruptures or cracks that can occur with the metal sheaths when the thermal expansions of the components enclosed in the sheath are caused by any possible increase of temperature that can happen in consequence of a direct sun exposure of the joints are no longer to be feared.

Although some embodiments of the joints according to the present invention have been illustrated and described, it is understood that the present invention includes in its scope any other alternative embodiment accessible to a technician of the field.

## C L A I M S

1) Joint for optical fiber telecommunication submarine cables (2, 3; 15, 16) of the types in which a plastic sheath enclosing a core provided with through cavities filled with a practically incompressible fluid and loosely housing the optical fibers and a mechanically resistant armour that occupies the radially innermost core zone, said joint (1, 14) being characterized by the fact of comprising: a mechanical connection (4, 17) that butt-joints the armours (5, 6; 18, 19) of the cables, connections (11, 27) among the extremities of the optical fibers (9, 26) projecting from the cables enclosed in cavities (10, 12, 23) filled with an incompressible fluid of the joint body (7, 20) of plastic material, said cavities (10, 12, 23) extending in longitudinal direction to the joint, and a plastic sheath (13, 28) enclosing the joint body matching the radially outermost surface, said joint being devoid of any tight metal sheath and of any mechanically resistant armour outside of and surrounding the zone in which the optical fibers and their connections are disposed.

2) Joint according to claim 1, characterized by the fact that the joint body (7, 20) provided with cavities filled with an incompressible fluid where there are loosely housed the connections (11, 27) among the extremities of the optical fibers (9, 26) projecting from the cables comprises tubes (10) filled with an incompressible fluid, butt-connected to one another by a sleeve (12), said tubes (10) and sleeves (12) being disposed around the mechanical connection (4) of the cable armours, the plastic joint sheath (13), that matches the radially outermost surface of the joint body, filling all the spaces existing between the tubes (10), sleeves (12) and the mechanical connection (4).

3) Joint according to claim 2, characterized by the fact that the joint body comprises a covering layer (7) of plastic material for the mechanical connection of the armours (4), that the tubes (10) connected to one another by the sleeves (12) are disposed around said covering layer (7) of plastic material and in contact with it and that the plastic joint sheath (13) fills all the spaces existing between the tubes (10) connected by the sleeves (12) and the covering layer (7) of the mechanical connection (4) between the armours (5, 6).

4) Joint according to claim 1, characterized by the fact that the joint body of plastic material comprises a tubular layer (20) of plastic material, surrounding and bound to the mechanical connection (17) between the cable armours (18, 19) provided on the outer surface of grooves (23) extending in longitudinal direction to the joint filled with an incomprensible fluid and loosely housing the extremities (26) of the cable optical fibers and their connections (27), the joint sheath (28) of plastic material adhering to the radially outermost surface of the sleeve (20) and closing the grooves (23).

5) Joint according to claim 4, characterized by the fact that the extremities of the cable optical fibers and their connections are loosely housed within tubes connected by sleeves and filled with an incompressible fluid encased in the grooves, filled with an incompressible fluid disposed on the outer surface of the tubular layer of plastic material forming the joint body, the sheath (28) of plastic material of the joint adhering to the radially outermost surface of the tubular layer (20) closing the grooves (23).

6) Joint according to claim 5, characterized by the fact that the plastic material of the joint sheath (28) penetrates into the grooves (23) of the tubular layer (20) of plastic material of the joint body originating a plurality of ribs whose profile has a shape complementary to that of the tubes and the sleeves.

7) Joint according to claim 1, characterized by the fact that the mechanical connection (4, 17) that butt-joints the cable armours (5, 6; 18, 19) is a metallic ferrule and that within this latter any space not occupied by the armours is filled with a practically incompressible fluid.

fig.1

fig. 2

P 533